# EUROPÄISCHE PATENTSCHRIFT

(11) **EP 0 935 129 B1**
(45) Veröffentlichungstag und Bekanntmachung des Hinweises auf die Patenterteilung: **26.09.2001**
(21) Anmeldenummer: 99100779.0
(22) Anmeldetag: 16.01.1999
(51) Int. Cl.: G01L 5/16, G01L 3/14

(54) **Mehrkomponenten-Messrad**
Multi-component measuring wheel
Roue de mesure à plusieurs composants

(30) Priorität: 07.02.1998 DE 19804981
(43) Veröffentlichungstag der Anmeldung: 11.08.1999
(73) Patentinhaber: DaimlerChrysler AG, 70567 Stuttgart (DE)
(72) Erfinder: Bacher, Gerald, 73630 Remshalden (DE); Dörrie, Dieter, 70327 Stuttgart (DE)

(56) Entgegenhaltungen:
- EP-A- 0 677 729
- EP-A- 0 816 817
- DE-A- 3 213 319
- DE-A- 4 133 418
- DE-C- 4 430 503

## Beschreibung

Die vorliegende Erfindung betrifft ein Mehrkomponenten-Meßrad gemäß dem Oberbegriff von Anspruch 1.

Ein Mehrkomponenten-Meßrad ist beispielsweise aus der DE 41 33 418 C2 bekannt. Das bekannte Mehrkomponenten-Meßrad wird zu Meßzwecken in ein Fahrzeugrad integriert und bietet den Vorteil, daß es ohne große Umbaumaßnahmen an unterschiedlichen Fahrzeugen einsetzbar ist. Der eigentliche Sensorteil, der mit einem den Fahrzeugreifen tragenden Felgenring verbunden ist, besteht aus einem Kranz von mehreren parallel zur Radachse verlaufenden Stehbolzen und einer Meßscheibe, die einen im wesentlichen sternförmigen Aufbau mit acht radial verlaufenden, einen Innenring und einen Außenring der Meßscheibe verbindenden Stegen aufweist. Die Stehbolzen dienen neben der Befestigung der Meßscheibe an einem an dem Felgenring befestigten Hilfsflansch als axiale Meßquerschnitte und sind mit Dehnmeßstreifen bestückt. Die radial verlaufenden, speichenartigen Stege dienen als Meßstege und sind ebenfalls mit Dehnmeßstreifen bestückt. Durch diese Anordnung wird eine Messung von Kraftkomponenten in x-, y- und z-Richtung sowie der zugehörigen Momente ermöglicht. Nachteilig bei diesem Mehrkomponenten-Meßrad ist, daß es aus einer Vielzahl von Einzelteilen zusammengesetzt ist, welche möglichst toleranzfrei montiert werden müssen, was mit hohem Zeit- und Kostenaufwand verbunden ist.

Aus der DE 44 30 503 C1 ist ein Drehmomentsensor mit Dehnmeßstreifenanordnung bekannt, dessen Meßkörper von einem in einer Axialebene liegenden kreisringförmigen Bereich eines Scheibenkörpers gebildet ist. Der Scheibenkörper besitzt einen radial innen an den Meßkörperbereich anschließenden ersten und einen radial außen an den Meßkörperbereich anschließenden zweiten Drehmomentübertragungsteil, von denen einer die drehmomenteinleitende und der andere die drehmomentausleitende Seite für den Meßkörperbereich bildet. Der kreisringförmige Bereich weist eine gegenüber den Drehmomentübertragungsteilen geringere axiale Dicke auf, so daß er unter Drehmomenteinwirkung mechanische Spannungen zeigt. Dieser Drehmomentsensor ist zur Ermittlung von Momenten in Kraftfahrzeuggetrieben geeignet.

Aus der DE 43 11 903 A1 ist ein Mehrkomponenten-Meßrad mit zwischen Felgenstirnseite und einem Radflansch angeordneten Meßwertaufnehmern bekannt, wobei der Radflansch und/oder die Felgenstirnseite aus einem Faserverbundwerkstoff bestehen. Radseitige Energie- und Datenübertragungsmittel sind an der Innenseite des einen Fahrzeugreifen aufnehmenden Felgenbettes angebracht und erstrecken sich im wesentlichen über dessen Umfang. Die Verbindung zwischen dem Felgenbett und der Felgenstirnseite erfolgt durch eine Fertigung des Faserverbundwerkstoffes für die Felgenstirnseite in dem vorher sandgestrahlten Felgenbett, wodurch eine formschlüssige Verbindung mit guter Adhäsionskraft entsteht. Durch diese Ausgestaltung kann bei dem bekannten Meßrad auf ein über die seitlichen Fahrzeugaußenkonturen hinausragendes Energie- und Datenübertragungssystem sowie auf den hierbei erforderlichen Halterahmen verzichtet werden. Jedoch ist durch dieser Ausgestaltung eine felgenspezifische Adaption verbunden, so daß das bekannte Meßrad nicht zur Verwendung mit anderen Felgen geeignet ist.

Aus der DE 42 16 670 C2 ist ein weiteres Mehrkomponenten-Meßrad bekannt, das eine Radial-/Tangential-Verbindungsanordnung aufweist, welche die Radnabe in den Radial- und Tangentialrichtungen des Meßrads steif mit der Felge verbindet und in der Axialrichtung eine weiche Verbindung zwischen Nabe und Felge darstellt, wobei sich die Steifigkeiten dieser Verbindungsanordnung in Radial- und Tangentialrichtung unterscheiden. Diese Konstruktion muß wegen ihrer wenig kompakten Bauweise als störanfällig angesehen werden.

Ein gattungsgemäßes Mehrkomponenten-Meßrad ist aus der EP 0 816 817 A2 bekannt. Hier ist eine Radmessnabe mit einem Meßwertaufnehmer beschrieben, der ein äußeres und ein inneres Ringteil umfaßt, wobei an dessen äußerem Ringteil eine Felge anordenbar ist, an dessen innerem Ringteil ein Radflansch anordenbar ist und wobei beide Ringteile über radial verlaufende Messstege miteinander verbunden sind, an denen Dehnmessstreifen zur Bestimmung von zu messenden Kräften und Momenten angeordnet sind.

Aus der DE 32 13 319 ist ebenfalls eine Einrichtung zur Messung von Kraft- und Momentenkomponenten längs und um drei orthogonale Achsen beschrieben, die im Wesentlichen aus einem mittleren Nabenteil, einem ringförmigen Rand- oder Felgenteil und vier radialen Speichenteilen bestehen, die den Nabenteil und den Randteil verbinden und mit Dehnungsfühlern zum Erzeugen von Verformungen anzeigenden elektrischen Signalen versehen sind. Die dort beschriebene Einrichtung kann für ein Reifenprüfgerät, eine Windkanalwaage und ähnliches verwendet werden, wobei entweder der Nabenteil oder der Randteil festgehalten wird und eine Kraft auf den anderen dieser beiden Teile zur Einwirkung gebracht wird. Eine unabhängige Messung der verschiedenen Komponenten wird dadurch gewährleistet, daß die Speichenteile einen nabennahen, relativ starren Schaftteil und einen dünneren, tordierbaren Endteil aufweisen.

Schließlich ist aus der DE 41 33 418 ein Mehrkomponenten-Meßscheibenrad für Fahrzeuge bekannt, bei dem an einem Hilfsflansch der speziell ausgebildeten Felge über mehrere, achsparallele, als Meßquerschnitte dienende und mit Dehnmeßstreifen bestückten Stehbolzen eine ringförmige Meßscheibe im Abstand zum Hilfsflansch gehaltert ist, die speichenartige Meßstege aufweist, die ebenfalls mit den Meßstreifen bestückt sind. Der Innenrand der Meßscheibe ist mit einem topfförmigen Radadapter verschraubt, der den Axialabstand zwischen Meßscheibe und axialer Normalposition des Anschraubflansches der Radscheibe eines üblichen Fahrzeugrades ausgleicht und im Anschraubbereich mit dem Anschraubflansch einer üblichen Fahrzeugrad-Radscheibe übereinstimmt.

Nachteilig beim Stand der Technik ist der bedingt durch die Vielzahl der Einzelteile verursachte hohe Fertigungs- und Montageaufwand der Meßräder. Es muß ferner eine große Anzahl von Dehnmeßstreifen verwendet werden, wodurch ein hoher Applikations- und Verdrahtungsaufwand entsteht. Ferner ist ein ungünstiges Verhältnis zwischen den maximalen Materialspannungen und den Nut zspannungen für die Dehnmeßstreifen festzustellen.

Aufgabe der Erfindung ist die Schaffung eines Mehrkomponenten-Meßrades mit einem zwischen einer Nabe und einer Felge angeordneten Meßglied, wobei das Meßglied in axialer Richtung möglichst klein baut, d.h. möglichst wenig aus der durch Nabe und Felge gebildeten Radebene vorragt.

Diese Aufgabe wird gelöst durch ein Mehrkomponenten-Meßrad mit den Merkmalen des Patentanspruchs 1.

Erfindungsgemäß ist nun ein kompakt bauendes Mehrkomponenten-Meßrad zur Messung von zwischen einer Nabe und einer Felge wirkenden Kräften und Drehmomenten zur Verfügung gestellt, welches in axialer Richtung sehr klein baut, d.h. von der durch Nabe und Felge gebildeten Radebene nur wenig vorragt. Ein derartiges Mehrkomponenten-Meßrad ist sowohl auf dem Prüfstand, als auch unter Alltagsbedingungen beispielsweise im Straßenverkehr verwendbar. Da das Meßglied einteilig und rotationssymmetrisch ausgebildet ist, ist es in einfacher Weise zwischen Nabe und Felge anbringbar. Der Montageaufwand ist gegenüber herkömmlichen Meßanordnungen, die eine Vielzahl von Einzelteilen aufweisen, vermindert. Das erfindungsgemäße Meßglied sowie Felge und Nabe sind modulare Bauteile, welche bei Bedarf in einfacher Weise einzeln ausgetauscht werden können. Das Meßglied weist einen mit der Felge verbundenen, sich im wesentlichen radial nach innen erstreckenden ringförmigen Flansch, einen an diesen Flansch radial nach innen anschließenden, sich im wesentlichen axial erstreckenden rohrförmigen Abschnitt, einen an den rohrförmigen Abschnitt radial nach innen anschließenden Zwischenflansch, einen an den Zwischenflansch radial nach innen anschließenden ringförmigen Bereich und einen an den ringförmigen Bereich radial nach innen anschließenden, gegebenenfalls über wenigstens einen Nabenadapter, mit der Nabe verbundenen ringförmigen Flansch auf. Ein derartiges Meßglied ist in einfacher Weise einstückig herstellbar und erweist sich in der Praxis als sehr robust. Gleichzeitig ist hier ein geringes Materialspannungsniveau bei gleichzeitig hoher Meßempfindlichkeit gewährleistet. Hierbei dienen der sich im wesentlichen axial erstreckende rohrförmige Abschnitt, und der sich im wesentlichen radial erstreckende ringförmige Bereich 7 als Meßquerschnitte, welche in an sich bekannter Weise mit den Meßstreifen bestückt werden, worauf weiter unten im einzelnen eingegangen wird. Durch gleichmäßige Verteilung derartiger Dehnmeßstreifen können demnach lastbedingte Widerstandsänderungen eliminiert werden, so daß nach außen ausschließlich die drehmomentbedingten Widerstandsänderungen wirksam werden. Durch entsprechende Anordnung der Dehnmeßstreifen erhält man ein Optimum des entsprechenden Nutzsignals bei gleichzeitiger Minimierung der Störsignale. Bezüglich der verschiedenen Möglichkeiten derartiger Verschaltungen von Dehnmeßstreifen wird beispielsweise auf die DE 27 08 484 C2 verwiesen. Die jeweils als Meßquerschnitt ausgebildeten Abschnitte weisen im Gegensatz zu den übrigen Bereichen des Meßgliedes eine verhältnismäßig geringe Steifigkeit auf, so daß auftretende Spannungen wirksam zur Ableitung von Meßsignalen verwendet werden können.

Zweckmäßigerweise ist im Verbindungsbereich zwischen rohrförmigen Abschnitt und Zwischenflansch ein axialer Einstich bzw. eine axiale Einkerbung ausgebildet. Durch diese Maßnahme kann die axiale Baulänge des Mehrkomponenten-Meßrades weiter vermindert werden.

Nach einer bevorzugten Ausgestaltung des erfindungsgemäßen Mehrkomponenten-Meßrades nimmt die axiale Dicke des ringförmigen Bereiches des Meßgliedes in radialer Richtung von innen nach außen ab. Hierdurch erhält man bei Einwirkung von Kräften oder Momenten eine in radialer Richtung gleichmäßige Spannungsverteilung im ringförmigen Bereich, wodurch die Auswertung von Meßsignalen hier aufgebrachter Dehnmeßstreifen vereinfacht ist.

Zweckmäßigerweise weist der Zwischenflansch einen radial nach innen gerichteten, ringförmigen Schulterbereich auf. Ein derartiger Schulterbereich ist gegenüber äußeren Einwirkungen relativ geschützt, so daß beispielsweise Lötstützpunkte hier vorteilhaft anbringbar sind.

Zweckmäßigerweise sind die Dehnmeßstreifen auf dem ringförmigen Bereich, insbesondere dessen axial inneren und äußeren Wandungen, und/oder dem rohrförmigen Abschnitt, insbesondere dessen Innenseite, angeordnet. Diese Bereiche weisen eine relativ geringe Steifigkeit auf, so daß hier genaue Messungen durchführbar sind.

Vorteilhafterweise überdecken die Dehnmeßstreifen jeweils einen Winkel von 20° bis 40°. Bei Verwendung derartiger Dehnmeßstreifen sind in einfacher Weise Meßsignale ausreichender Größe erhaltbar. Ferner ist die Zahl der für eine ausreichend genaue Messung benötigten Dehnmeßstreifen gegenüber herkömmlichen Anordnungen reduziert, wodurch sich der Verdrahtungsaufwand vermindert.

Zweckmäßigerweise sind die jeweiligen Dehnmeßstreifen der Dehnmeßstreifenanordnung zu Voll- oder Halbbrücken verschaltet. Durch diese an sich bekannte Verschaltung ist es möglich, Dehnungen des Mehrkomponenten-Meßrades in elektrische Spannungen umzuwandeln.

Nach einer vorteilhaften Ausgestaltung weist der rohrförmige Abschnitt einen inneren kegelförmig, und einen äußeren zylinderförmig ausgebildeten Abschnitt auf. Hierdurch ist ein robuster Anschluß an den radial äußeren Flansch, sowie eine relativ geringe Steifigkeit des Bereiches des rohrförmigen Abschnitts, auf dem die Dehnmeßstreifen angebracht sind, gewährleistet.

Vorteilhafterweise weist der rohrförmige Abschnitt ein Verhältnis Durchmesser/Länge von kleiner als 1:6 auf. Durch Einhaltung dieser Maße ist eine geringe axiale Bauhöhe bei gleichzeitig ausreichender Empfindlichkeit des Meßgliedes gegeben.

Zweckmäßigerweise sind im Inneren des Mehrkomponenten-Meßrades, insbesondere im Innern des rohrförmigen Abschnitts Übertragungsmittel zum Übertragen aufgenommener Meßsignale an eine Auswerteeinrichtung vorgesehen. Durch Ausnutzen des Innenraums des rohrförmigen Abschnitts ist eine sehr kompakte Bauweise des Mehrkomponenten-Meßrades insgesamt erzielbar.

Es ist bevorzugt, daß das Meßglied mittels Zentrierabsätzen und/oder Positionierstiften, insbesondere mittels wenigstens eines Nabenadapters, mit der Nabe, sowie mit der Felge verbindbar ist. Derartige Verbindungsmittel sind einfach zu handhaben, wodurch der Montageaufwand des Mehrkomponenten-Meßrades bzw. die Auswechslung von Einzelteilen vermindert bzw. erleichtert ist.

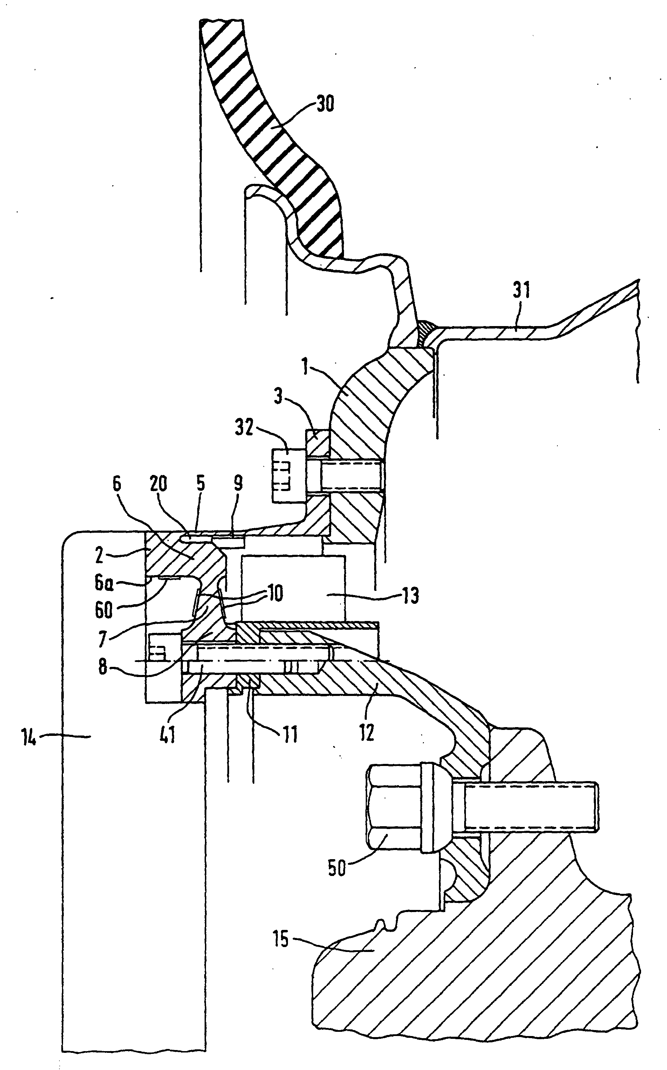

Eine bevorzugte Ausführungsform der Erfindung wird nun im einzelnen anhand der beigefügten Zeichnung erläutert. In dieser zeigt
die einzige Figur einen achsparallelen Schnitt durch das erfindungsgemäße Mehrkomponenten-Meßrad.

In der einzigen Figur ist das Mehrkomponenten-Meßrad im einzelnen dargestellt. Es weist einen den Fahrzeugreifen 30 tragenden Felgenring 31 auf, der in seinem Querschnitt einem üblichen Fahrzeugrad entspricht. Allerdings enthält das Mehrkomponenten-Meßrad keine übliche Radscheibe, vielmehr ist an deren Stelle ein Meßglied 2 vorgesehen. Bezüglich der Radachse radial außen weist das Meßglied einen ringförmigen Flansch 3 auf. Über eine Anzahl von Schrauben 32, welche Bohrungen in dem ringförmigen Flansch 3 durchsetzen, ist das Meßglied 2 mit der Felge 31 bzw. einem Felgenansatz 1 verbunden. Vom ringförmigen Flansch 3 erstreckt sich in axialer Richtung ein rohrförmiger Abschnitt 5. Dieser weist axial innenseitig, d.h. anschließend an den ringförmigen Flansch 3, ein kegelförmiges Profil, und hieran anschließend ein zylindrisches Profil auf. Am Ende des rohrförmigen Abschnitts 5 ist radial nach innen ein Zwischenflansch 6 ausgebildet. Hierbei ist im Verbindungsbereich zwischen rohrförmigen Bereich 5 und Zwischenflansch 6 eine Einkerbung 20 vorgesehen, durch welche die effektive axiale Länge des rohrförmigen Abschnittes 5 vergrößert ist. Durch diese Maßnahmen ist die Steifigkeit des rohrförmigen Abschnitts 5 relativ gering. An den Zwischenflansch 6 schließt sich radial nach innen ein ringförmiger Bereich 7 an, welcher in einem weiteren ringförmigen Flansch 8 mündet. Der Bereich 7 weist, ähnlich wie der ringförmige Abschnitt 5, ebenfalls eine relativ geringe Steifigkeit auf, so daß er eine membranartige Funktion bei der Aufnahme von Meßwerten erfüllt. Über Schrauben 41, welche Bohrungen des ringförmigen Flansches 8 durchsetzen, ist das Meßglied 2 mit Nabenadaptoren 11, 12 verbunden. Der Nabenadaptor 12 ist seinerseits über Schrauben 50 mit der Nabe 15 verschraubbar. Durch Zwischenschaltung der Adaptoren 11, 12 zwischen Meßglied 2 und Radnabe 15 ist eine Verwendung des Meßgliedes zusammen mit einer Vielzahl von Radnaben möglich.

Der ringförmige Bereich 7 weist im Querschnitt eine Trapezform auf, d.h. die axiale Dicke des ringförmigen Bereiches 7 nimmt in radialer Richtung von innen nach außen ab. Hierdurch ist gewährleistet, daß bei Einwirken von Kräften bzw. Drehmomenten auf das Meßrad die hierbei auftretenden Spannungen gleichmäßig über den ringförmigen Bereich 7 verteilt werden. Die auftretenden Spannungen werden mittels Dehnmeßstreifen 10, die jeweils gleichmäßig um den Umfang des Meßgliedes auf den trapezförmig verlaufenden Seitenwänden des ringförmigen Bereiches 7 angeordnet sind, gemessen. Durch Verwendung von Meßstreifen, die sich in Umfangsrichtung über einen Winkelbereich von etwa 20° bis 40° erstrecken, sind sehr genaue Meßergebnisse erzielbar. Zur Messung der jeweiligen Kraft- bzw. Momentenkomponenten sind die Dehnmeßstreifen in bekannter Weise zu Voll- oder Halbbrücken verschaltbar. Hierzu sind auf jeder Seitenwand des ringförmigen Bereiches 7 wenigstens vier, vorzugsweise acht Meßstreifen in gleichmäßigen Abständen vorgesehen.

Weitere Dehnmeßstreifen 9 sind auf der Innenseite des rohrförmigen Bereiches 5 ausgebildet. Auch diese Dehnmeßstreifen erstrecken sich vorzugsweise über einen Winkelbereich von 20° bis 40°. Hier sind wenigstens 6, vorzugsweise 16 Meßstreifen in gleichmäßigen Abständen um den Umfang des Meßgliedes verteilt vorgesehen, welche ebenfalls zu Voll- bzw. Halbbrücken verschaltbar sind.

Die über die jeweiligen Dehnmeßstreifen aufgenommenen Meßsignale werden in Meßsignalaufbereitungs- und Überträgereinheiten 13, 14 für die Übertragung zu entsprechenden Auswerteeinheiten aufbereitet. Bei Leistungs- und Signalübertragung zum Achsschenkel erfolgt die Übertragung vorzugsweise mittels des Überträgers in der Einheit 13, und bei der Übertragung zur Karosserie mittels des Überträgers in der Einheit 14. Die Einheit 14 kann derart ausgebildet sein, daß sie das Meßglied im wesentlichen nach außen abdeckt und so vor äußeren Einflüssen schützt.

Der Zwischenflansch 6 ist mit einer radial innenseitig ausgebildeten Schulter 6a ausgebildet, auf welcher beispielsweise Lötstützpunkte 60 vorteilhaft anbringbar sind.

Die erfindungsgemäße Meßeinrichtung ist durch ein geringes Materialspannungsniveau bei gleichzeitig hoher Empfindlichkeit der Meßsignale gekennzeichnet.

Durch Integration der Meßsignalaufbereitungs- und Übertragungseinheiten 13, 14 in die Meßgliedgeometrie ist eine geringe axiale Bauhöhe des Mehrkomponenten-Meßrades erzielbar.

Das Meßglied 2 ist mittels (nicht im einzelnen dargestellter) Zentrierabsätze, Positionierstifte und Schrauben in einfacher Weise mit den Nabenadapter bzw. der Nabe und der Felge verbindbar. Defekte Einzelteile können hierbei in einfacher Weise ausgewechselt werden.

## Patentansprüche

1. Mehrkomponenten-Meßrad mit einer Felge (1, 31), einer Nabe (15) und einem zwischen Felge (1, 31) und Nabe (15) angeordneten, eine Dehnmeßstreifenanordnung (9, 10) aufweisenden Meßglied (2), wobei das Meßglied (2) im wesentlichen rotationssymmetrisch bezüglich der Drehachse des Mehrkomponenten-Meßrades und einstückig ausgebildet ist
**dadurch gekennzeichnet,**
**daß** das Meßglied (2) einen mit der Felge (1, 31) verbundenen, sich im wesentlichen radial nach innen erstreckenden ringförmigen Flansch (3), einen an diesen Flansch (3) radial nach innen anschließenden, sich im wesentlichen axial erstreckenden rohrförmigen Abschnitt (5), einen an den rohrförmigen Abschnitt (5) radial nach innen anschließenden Zwischenflansch (6), einen an den Zwischenflansch (6) radial nach innen anschließenden ringförmigen Bereich (7) und einen an den ringförmigen Bereich (7) radial nach innen anschließenden, gegebenenfalls über wenigstens einen Nabenadapter (11, 12), mit der Nabe (15) verbundenen ringförmigen Flansch (8) aufweist.

2. Mehrkomponenten-Meßrad nach Anspruch 1, **dadurch gekennzeichnet, daß** im Verbindungsbereich zwischen rohrförmigem Abschnitt (5) und Zwischenflansch (6) ein axialer Einstich (20) ausgebildet ist.

3. Mehrkomponenten-Meßrad nach einem der Ansprüche 1 oder 2,
**dadurch gekennzeichnet, daß** die axiale Dicke des ringförmigen Bereiches (7) des Meßgliedes (2) in radialer Richtung von innen nach außen abnimmt.

4. Mehrkomponenten-Meßrad nach einem der Ansprüche 1 bis 3, **dadurch gekennzeichnet, daß** der Zwischenflansch (6) einen radial nach innen gerichteten, ringfömrigen Schulterbereich (6a) aufweist.

5. Mehrkomponenten-Meßrad nach einem der Ansprüche 1 bis 4, **dadurch gekennzeichnet, daß** die Dehnmeßstreifen (9, 10) auf dem ringförmigen Bereich (7), insbesondere den axial inneren und der äußeren Wandungen (7a, 7b) des Bereiches (7), und/oder dem rohrförmigen Abschnitt (5), insbesondere der Innenseite des rohrförmigen Abschnitts (5), angeordnet sind.

6. Mehrkomponenten-Meßrad nach einem der vorstehenden Ansprüche, **dadurch gekennzeichnet, daß** die Dehnmeßstreifen (9, 10) jeweils einen Winkel von 20° bis 40° überdecken.

7. Mehrkomponenten-Meßrad nach einem der vorstehenden Ansprüche, **dadurch gekennzeichnet, daß** die Dehnmeßstreifen (9, 10) zu Voll- oder Halbbrücken verschaltet sind.

8. Mehrkomponenten-Meßrad nach einem der Ansprüche 1 bis 7, **dadurch gekennzeichnet, daß** der rohrförmige Abschnitt (5) einen inneren kegelförmig, und einen äußeren zylinderförmig ausgebildeten Abschnitt aufweist.

9. Mehrkomponenten-Meßrad nach einem der Ansprüche 1 bis 7, **dadurch gekennzeichnet, daß** der rohrförmige Abschnitt (5) ein Verhältnis Durchmesser/Länge von kleiner als 1:6 aufweist.

10. Mehrkomponenten-Meßrad nach einem der vorstehenden Ansprüche, **dadurch gekennzeichnet, daß** im Innern des Meßgliedes (2), insbesondere im Innern des rohrförmigen Abschnitts (5), Übertragungsmittel (13) zum Übertragen aufgenommener Meßsignale an eine Auswerteeinrichtung vorgesehen sind.

11. Mehrkomponenten-Meßrad nach einem der vorstehenden Ansprüche, **dadurch gekennzeichnet, daß** das Meßglied (2) mittels Zentrierabsätzen und/oder Positionierstiften und/oder Schrauben mit der Nabe (15), insbesondere über den wenigstens einen Nabenadapter (11, 12), sowie mit der Felge (1, 31) verbindbar ist.

## Claims

1. Multi-component measuring wheel with a rim (1, 31), a hub (15) and a measuring element (2) fitted with a strain gauge assembly (9, 10) disposed between rim (1, 31) and hub (15), the measuring element (2) being substantially symmetrical in revolution relative to the rotation axis of the multi-component measuring wheel and made in a single piece,
**characterised in that**
the measuring element (2) has an annular flange (3) extending substantially radially towards the interior, a substantially axially extending tubular portion (5) adjoining this flange (3) radially towards the interior, an intermediate flange (6) adjoining the tubular portion (5) radially towards the interior, an annular region (7) adjoining the intermediate flange (6) radially towards the interior and an annular flange (8) adjoining the annular region (7) radially towards the interior and connected to the hub (15), optionally by means of at least one hub adapter (11, 12).

2. Multi-component measuring wheel as claimed in claim 1, **characterised in that** an axial indentation (20) is provided in the connecting region between tubular portion (5) and intermediate flange (6).

3. Multi-component measuring wheel as claimed in one of claims 1 or 2, **characterised in that** the axial thickness of the annular region (7) of the measuring element (2) decreases in a radial direction from the interior towards the exterior.

4. Multi-component measuring wheel as claimed in one of claims 1 to 3, **characterised in that** the intermediate flange (6) has an annular shoulder region (6a) directed radially towards the interior.

5. Multi-component measuring wheel as claimed in one of claims 1 to 4, **characterised in that** the strain gauges (9, 10) are disposed on the annular region (7), in particular the axial interior and exterior walls (7a, 7b) of the region (7), and/or on the tubular portion (5), in particular the internal face of the tubular portion (5).

6. Multi-component measuring wheel as claimed in one of the preceding claims, **characterised in that** the strain gauges (9, 10) respectively overlap an angle of 20° to 40°.

7. Multi-component measuring wheel as claimed in one of the preceding claims, **characterised in that** the strain gauges (9, 10) are wired to full or half bridges.

8. Multi-component measuring wheel as claimed in one of claims 1 to 7, **characterised in that** the tubular portion (5) has an inner cone-shaped and an outer cylindrical-shaped portion.

9. Multi-component measuring wheel a claimed in one of claims 1 to 7, **characterised in that** the tubular portion (5) has a diameter/length ratio of less than 1:6.

10. Multi-component measuring wheel as claimed in one of the preceding claims, **characterised in that** transmission means (13) for transmitting received measurement signals to an evaluation unit are provided in the interior of the measuring element (2), in particular inside the tubular portion (5).

11. Multi-component measuring wheel as claimed in one of the preceding claims, **characterised in that** the measuring element (2) can be connected to the hub (15) and to the rim (1, 31) by means of centring shoulders and/or locating pins and/or screws, in particular by means of the at least one hub adapter (11, 12).

## Revendications

1. Roue instrumentée à plusieurs composants comportant une jante (1, 31), un moyeu (15) et un élément de mesure (2) disposé entre la jante (1, 31) et le moyeu (15), présentant un agencement à jauge extensomètrique (9, 10), l'élément de mesure (2) étant réalisé en répondant sensiblement à une symétrie de rotation par rapport à l'axe de rotation de la roue instrumentée à plusieurs composants et en étant formés d'une seule pièce,
**caractérisée en ce que**
l'élément de mesure (2) présente une bride (3) à forme annulaire, s'étendant sensiblement radialement vers l'intérieur, reliée à la jante (1, 31), un tronçon (5) tubulaire s'étendant sensiblement axialement, se raccordant radialement vers l'intérieur à cette bride (3), une bride intermédiaire (6) se raccordant radialement vers l'intérieur au tronçon tubulaire (5), une zone annulaire (7), se raccordant radialement vers l'intérieur à la bride intermédiaire (6), et une bride (8) annulaire reliée au moyeu (15), se raccordant radialement vers l'intérieur à la zone annulaire (7), le cas échéant par l'intermédiaire d'au moins un adaptateur de moyeu (11, 12).

2. Roue instrumentée à plusieurs composants selon la revendication 1, **caractérisée en ce qu'**une entaille axiale (20) est ménagée dans la zone de liaison entre le tronçon tubulaire (5) et la bride intermédiaire (6).

3. Roue instrumentée à plusieurs composants selon l'une des revendications 1 ou 2, **caractérisée en ce que** l'épaisseur axiale de la zone annulaire (7) de l'élément de mesure (2) va en diminuant en direction radiale, en allant de l'intérieur vers l'extérieur.

4. Roue instrumentée à plusieurs composants selon l'une des revendications 1 à 3, **caractérisée en ce que** la bride intermédiaire (6) présente une zone d'épaulement (6a) à forme annulaire, tournée radialement vers l'intérieur.

5. Roue instrumentée à plusieurs composants selon l'une des revendications 1 à 4, **caractérisée en ce que** les jauges extensomètriques (9, 10) sont disposées sur la zone annulaire (7), en particulier les parois axialement intérieures et extérieures (7a, 7b) de la zone (7), et/ou le tronçon tubulaire (5) en particulier la face intérieure du tronçon tubulaire (5).

6. Roue instrumentée à plusieurs composants selon l'une des revendications précédentes, **caractérisée en ce que** les jauges extensomètriques (9, 10) recouvrent chacune un angle de 20° à 40°.

7. Roue instrumentée à plusieurs composants selon l'une des revendications précédentes , **caractérisée en ce que** les jauges extensomètriques (9, 10) sont branchées en ponts électriques pleins ou en demi-ponts.

8. Roue instrumentée à plusieurs composants selon l'une des revendications 1 à 7, **caractérisée en ce que** le tronçon tubulaire (5) présente un tronçon intérieur conique et un tronçon extérieur cylindrique.

9. Roue instrumentée à plusieurs composants selon l'une des revendications 1 7, **caractérisée en ce que** le tronçon tubulaire (5) présente un rapport diamètre/longueur inférieure à 1 : 6.

10. Roue instrumentée à plusieurs composants selon l'une des revendications précédentes, **caractérisée en ce que**, à l'intérieur de l'élément de mesure (2), en particulier à l'intérieur du tronçon tubulaire (5), sont prévus des moyens de transmission (13) pour assurer la transmission, à un dispositif d'évaluation, des signaux de mesure captés

11. Roue instrumentée à plusieurs composants selon l'une des revendications précédentes , **caractérisée en ce que** l'élément de mesure (2) est susceptible d'être relié au moyeu (15), à l'aide de décrochements de centrage et/ou de goupilles de positionnement et/ou de vis, en particulier par l'intermédiaire du au moins un adaptateur de moyeu (11, 12), ainsi que susceptible d'être relié à la jante (1, 31).
